# EUROPÄISCHE PATENTSCHRIFT

(11) **EP 2 473 767 B1**
(45) Veröffentlichungstag und Bekanntmachung des Hinweises auf die Patenterteilung: **29.05.2013**
(21) Anmeldenummer: 10757710.8
(22) Anmeldetag: 26.08.2010
(51) Int. Cl.: F16K 15/14, B62D 5/04

(54) **WASSERABLASSVENTIL MIT SCHIRMMEMBRAN**
WATER DRAIN VALVE COMPRISING A SHIELDING DIAPHRAGM
SOUPAPE DE VIDANGE D'EAU DOTÉE D'UNE MEMBRANE-ÉCRAN

(30) Priorität: 03.09.2009 DE 102009039832
(43) Veröffentlichungstag der Anmeldung: 11.07.2012
(73) Patentinhaber: ThyssenKrupp Presta AG, 9492 Eschen (LI)
(72) Erfinder: MATTHIAS, Michael, CH-9444 Diepoldsau (CH)
(74) Vertreter: Lenzing Gerber Stute
(86) Internationale Anmeldenummer: PCT/EP2010/005228
(87) Internationale Veröffentlichungsnummer: WO 2011/026583

(56) Entgegenhaltungen:
- BE-A- 434 701
- DE-A1- 4 439 880
- DE-A1-102006 036 214
- DE-C- 696 571
- DE-C1- 4 420 586
- JP-U- H0 717 973
- JP-U- 57 127 965
- US-A- 3 454 182
- US-A- 5 129 426

## Beschreibung

Die vorliegende Erfindung betrifft ein Wasserablassventil mit einer Schirmmembran sowie eine elektromechanische Servolenkung mit einem solchen Ventil.

Servolenkungen für Kraftfahrzeuge sind allgemein bekannt und üblich. Sie unterstützen die Lenkbewegung des Fahrers und ermöglichen so insbesondere bei schweren Fahrzeugen eine leichte Betätigung der Lenkung. In der Vergangenheit war der überwiegende Teil der Servolenkungen hydraulisch angetrieben, wobei ein Hydraulikaggregat in dem Gehäuse der Lenkung angeordnet ist. Diese Lenkungen sind gut geschützt gegen eindringendes Wasser. Selbst eingedrungenes Wasser ist bei einer solchen Lenkung nur auf längere Sicht kritisch, weil es zu Korrosion führen kann.

Im Gegensatz dazu sind elektromechanische Servolenkungen in letzter Zeit und insbesondere bei kleineren Fahrzeugen zunehmend zu finden. Elektromechanische Servolenkungen haben den Vorteil, dass sie über die elektronische Steuerung sehr flexibel ansteuerbar sind und damit an verschiedene Einsatzzwecke angepasst werden können. Sie haben insbesondere den Vorteil, dass sie keine Hydraulikflüssigkeit benötigen, die bei der Befüllung, bei der Wartung und bei der Entsorgung Probleme bereitet. Allerdings sind elektromechanische Servolenkungen empfindlicher gegenüber eindringendem Wasser. Neben der Korrosion der zahlreichen Komponenten einer solchen Lenkung kann auch die elektronische Steuerung beeinträchtigt werden, wenn nämlich Sensorsignale durch eingedrungenes Wasser verfälscht werden. Vor allen Dingen kann aber Wasser bei Temperaturen unter 0 Grad Celsius in der Lenkung gefrieren und das entstehende Eis kann die Lenkung blockieren.

Wasser kann auf verschiedene Weisen in die Lenkung gelangen. So kann einer der üblicherweise vorhandenen Faltenbälge beschädigt sein. Es kann Wasser im Bereich elektrischer Anschlüsse eindringen. Auch kann bei tieferen Temperaturen Wasserdampf aus der Luftfeuchtigkeit der im System befindlichen Luft kondensieren. Schließlich kann auch das Gehäuse der Lenkung selbst undicht werden. Beim Durchfahren von flachen Wasserlachen kann das Spritzwasser in die Lenkung eindringen. Wenn das Wasser so tief ist, dass die Lenkung vollständig getaucht wird, spricht man von so genannten Tauchfahrten. Bei letzteren können auch größere Wassermengen eindringen.

Elektromechanische Servolenkungen werden deshalb mit Wasserablassventilen versehen, die eingedrungenes Wasser automatisch aus der Lenkung heraus befördern sollen und die andererseits gegenüber von außen anstehendem Wasser, insbesondere bei Tauchfahrten, dicht sollen. Solche Ventile sind aus den Dokumenten EP1747393 B1, DE696571C, JPS7127,965U, JP-HO717973U, BE434701A, DE4439880A1 und WO 2006119315 A2 bekannt. Beide zeigen ein Ventil mit einer Membran, die einerseits eine Abdichtfunktion und andererseits eine Durchlassfunktion für eine Flüssigkeit aus einem Behälter zeigen. Beide Systeme sind jedoch in ihrem Aufbau kompliziert und nicht geeignet für den Einsatz in einem elektromechanischen Lenksystem. Ein Ventil, das den Anforderungen im Automobilbau genügt, muss einfach aufgebaut sein, den Innenraum des Lenkgetriebes auch von geringen, tropfenweise vorliegenden Wassermengen zuverlässig entwässern und unter den auftretenden Umweltbedingungen zuverlässig arbeiten. Schließlich darf ein Ventil im Automobilbau nicht zu komplex aufgebaut sein, um die Kosten und das Gewicht gering zu halten.

Der Aufbau eines in der Druckschrift DE 10 2006 036 214 A1 vorgeschlagenen Ventils ist ebenfalls sehr aufwändig, ohne dass hiermit vorteilhaft schnelle Schaltgeschwindigkeiten erzielt werden.

Die Druckschrift DE 4420586 C1 zeigt ein Wasserablassventil nach dem Oberbegriff des Anspruchs 1. Bei dem gezeigten mechanischen Aufbau werden sehr geringe Wassermengen bei niedrigem Druck nur unvollständig abgeleitet. Gleiches gilt für die Lösung aus der Druckschrift DE 1228948 B.

Es ist Aufgabe der vorliegenden Erfindung ein Wasserablassventil zu schaffen, das diesen Anforderungen genügt. Weiter ist es Aufgabe der vorliegenden Erfindung eine elektromechanische Servolenkung zu schaffen, die auch bei geringen eindringenden Wassermengen zuverlässig entwässert wird und gegenüber von außen eindringendem Wasser im Bereich des Ventils sicher abgedichtet ist.

Diese Aufgabe wird von einem Ventil mit den Merkmalen des Anspruchs 1 und von einer Servolenkung mit den Merkmalen des Anspruchs 10 gelöst. Die Unteransprüche zeigen vorteilhafte Weiterbildungen der Erfindung.

Weil ein Wasserablassventil für eine elektromechanische Kraftfahrzeugservolenkung mit einem Sockel und einer Membran versehen ist, die als bewegliches Ventilglied ausgebildet ist und die relativ zu dem Sockel zwischen einer geschlossen Stellung und einer offenen Stellung beweglich angeordnet ist, wobei die Membran in der geschlossenen Stellung mit dem Sockel entlang einem Ringwulst in Anlage ist, wobei der Sockel einen Durchgang aufweist, der von einer freien Öffnung zu einem Boden verläuft und die Membran mittig an dem Boden befestigt ist, wobei der Boden wenigstens einen Durchbruch aufweist, der eine Verbindung von dem Durchgang zu der Membran darstellt und der Boden weiterhin wenigstens eine Nut aufweist, die zu der Membran hin offen ist und die sich von dem wenigstens einen Durchbruch bezüglich der Symmetrieachse des Ventils von den Durchbrüchen nach außen bis zu dem Ringwulst erstreckt, werden auch tropfenweise Mengen von Wasser über die Membran abgeleitet.

Wenn die wenigstens eine Nut eine Nutentiefe, gemessen in Richtung der Achse und senkrecht zu der Bodenfläche, von 0,1 mm bis 0,9 mm, vorzugsweise 0,2 mm bis 0,4 mm und insbesondere 0,3 mm aufweist ergeben sich besonders in Verbindung mit einer Membran aus Silikon besonders gute Eigenschaften der Wasserableitung.

Entsprechend ist es vorteilhaft, wenn die Breite der Nut 0,5 mm bis 1,5 mm, vorzugsweise 1,0 mm, beträgt.

Die Länge der wenigstens einen Nut zwischen den äußeren Rändern der Durchbrüche und dem Ringwulst soll 1,5 mm bis 4,5 mm, vorzugsweise 3mm betragen, wobei die Nut nicht notwendigerweise exakt radial oder genau gerade verlaufen muss. Vorzugsweise ist der Nutengrund gerundet.

Wenn die Membran einen runden Membranteller umfasst, der eine sich von innen nach außen reduzierende Materialstärke aufweist, die innen zwischen 0,6 mm und 1,8 mm, bevorzugt 1,2 mm und außen entsprechend zwischen 0,45 mm und 1,35 mm, bevorzugt 0,9 mm beträgt, ist die Membran besonders beweglich und öffnet schon bei geringen Wassermengen ab ca. 20 Mikrolitern. Dabei ist es von Vorteil, wenn die Ringwulst ebenfalls eine runde Form besitzt und konzentrisch zum Membranteller angeordnet ist, insbesondere die Mitte des runden Membrantellers umschließt. Weiter bevorzugt erfolgt der dichtende Kontakt zwischen Membranoberfläche und Ringwulst bei einem Durchmesser von etwa 13 - 20mm.

Die Membran wird vorzugsweise mit einem mittigen Zapfen in einer mittigen Bohrung des Bodens befestigt, so dass sie etwa rotationssymmetrisch in dem Ventil sitzt. Hierdurch ist eine sichere Funktion auch bei Neigung zu einer beliebigen Richtung gegeben.

Die Membran wird besonders beweglich, wenn der Zapfen ein mittig angeordnetes Sackloch nach Art einer Sackbohrung aufweist.

Die Anordnung im Kraftfahrzeug wird vereinfacht, wenn die Membran auf ihrer dem Sockel abgewandten Seite mittels eines Deckels abgedeckt und gegen mechanische Beschädigung geschützt ist, weil dann kein gesonderter Schutz für das Ventil erforderlich ist. Auch kann der sich so bildende Raum als Druckraum für den Fall des Eindringens von Wasser dienen, und so die Membran gut an die dichtende Ringwulst andrücken und die Abdichtung erleichtern.

Erfindungsgemäß ist auch eine elektromechanische Kraftfahrzeugservolenkung mit einem Wasserablassventil, aufweisend:
- einen an einem tiefen Punkt eines Lenkungsgehäuses angeordneten Sockel und eine Membran, die als bewegliches Ventilglied ausgebildet ist und die relativ zu dem Sockel zwischen einer geschlossen Stellung und einer offenen Stellung beweglich angeordnet ist,
- wobei die Membran mit in der geschlossenen Stellung dem Sockel entlang einem Ringwulst in Anlage ist,
- wobei der Sockel einen zu einem Innenraum des Lenkungsgehäuses offenen Durchgang aufweist, der von einer freien Öffnung zu einem Boden verläuft und die Membran mit einem Zapfen mittig an dem Boden befestigt ist,
- wobei der Boden wenigstens einen Durchbruch aufweist, der eine Verbindung von dem Durchgang zu der Membran darstellt und wobei der Boden wenigsten eine Nut aufweist, die zu der Membran hin offen ist und die sich von dem wenigstens einen Durchbruch bis zu dem Ringwulst erstreckt.

Eine solche Lenkung wird bei eintretendem Wasser besonders gut und zuverlässig entwässert, wobei die Entwässerung zuverlässig auch bei geringen, tropfenweise anfallenden Wassermengen erfolgt. Dafür ist es vorteilhaft, wenn die Membran und/oder der Sockel, und gegebenenfalls auch die Innenseite des Lenkungsgehäuses eine hydrophobe Oberfläche aufweisen.

Die Membran wird besonders geschützt, wenn sie zwischen dem Sockel und einem Deckel gelagert ist.

Der Innenraum der Lenkung, genauer gesagt des Lenkgetriebes, ist gegenüber der Atmosphäre belüftet, wenn die Membran im Ruhezustand nicht über den gesamten Umfang an dem Ringwulst anliegt. Es wird dann ein Aufbau einer Druckdifferenz zwischen dem Lenkgetriebe und der Umgebungsluft verhindert. Die leichte Beweglichkeit der Membran sichert dennoch, dass kein Wasser von außen über das Ventil in die Lenkung eindringt, weil die Membran in diesem Fall sofort schließt.

Nachfolgend werden Ausführungsbeispiele der vorliegenden Erfindung anhand der Zeichnung näher beschrieben. Es zeigen:
- Figur 1:: Eine elektromechänische Servolenkung mit Lenkrad und Lenksäule in einer perspektivischen Darstellung;
- Figur 2:: Ein elektromechanisches Lenkgetriebe in einer Ansicht in Fahrtrichtung;
- Figur 3:: Eine erste Ausführungsform eines Wasserablassventils in einem Querschnitt von der Seite;
- Figur 4:: Den Grundkörper des Ventils aus Figur 3 in einer Ansicht von unten;
- Figur 5:: Eine Draufsicht auf den Deckel des Ventils aus Figur 3;
- Figur 6:: Zwei andere Ausführungsformen des Wasserablassventils in einem Querschnitt, wobei die linke Hälfte der Figur 6 eine zweite Ausführungsform und die rechte Hälfte der Figur 6 eine dritte Ausführungsform zeigt; sowie
- Figur 7:: Die beiden Ausführungsformen aus Figur 6 mit geöffnetem Ventilglied.

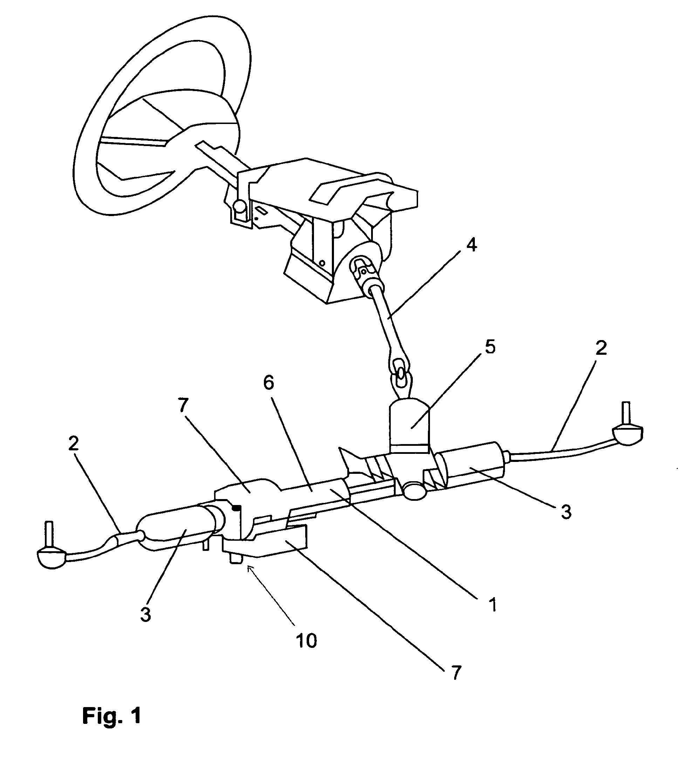

Die Figur 1 zeigt eine erfindungsgemäße elektromechanische Servolenkung mit einem Lenkgetriebe 1, das in bekannter Weise eine längsverschieblich gelagerte Zahnstange aufweist, die in dieser Darstellung nicht sichtbar ist. Die Zahnstange ist gelenkig mit zwei Spurstangen 2 verbunden. Das Gelenk ist jeweils mit einem Faltenbalg 3 gekapselt. Der Faltenbalg 3 schützt das Innere des Lenkgetriebes 1 im Bereich der beweglichen Komponenten gegenüber Umwelteinflüssen.

Die Zahnstange wird über eine Lenksäule 4 und einen Verzahnungseingriff betätigt, sodass bei Drehung der Lenksäule 4 die Zahnstange und damit auch die Spurstangen 2 in ihrer Längsrichtung verlagert werden. Das dabei entstehende Drehmoment in der Lenksäule 4 wird mit einem Drehmomentsensor 5 erfasst. Ein elektrischer Servomotor 6 treibt bei dieser Bauform die Zahnstange zur Unterstützung des Fahrers an. Die in Figur 1 dargestellte Bauform entspricht einem Hohlwellenmotor, der über ein Reduziergetriebe die den Hohlwellenmotor durchsetzende Zahnstange antreibt. Der Servomotor 6 ist in einem Motorgehäuse 7 angeordnet. Am Motorgehäuse 7 ist in der dargestellten Einbauposition der tiefste Punkt des Lenkgetriebes 1 angeordnet. An diesem tiefsten Punkt ist ein Wasserablassventil 10 angeordnet.

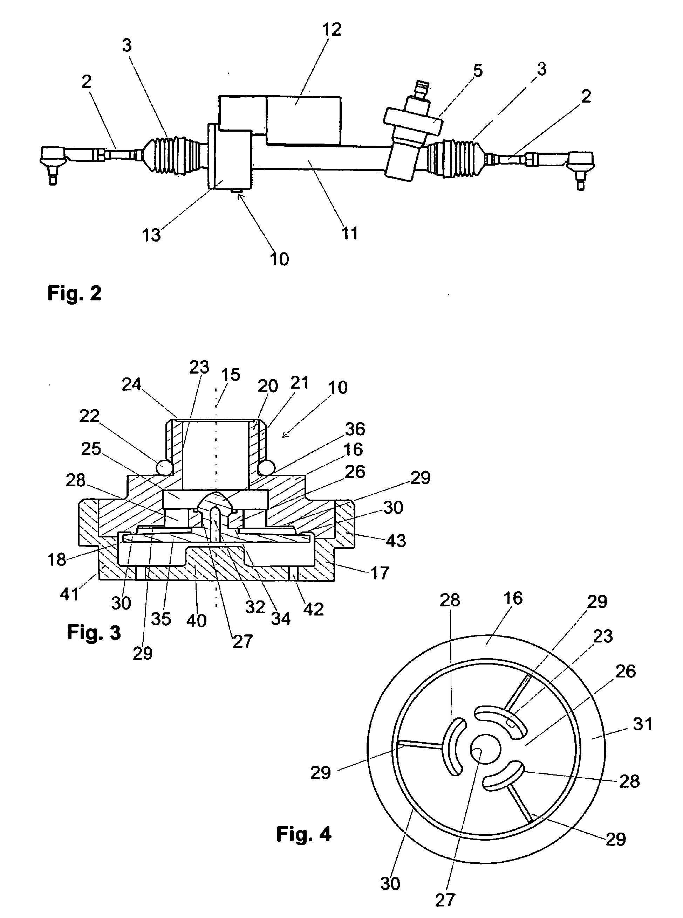

In ähnlicher Weise zeigt die Figur 2 ein Lenkgetriebe 11 mit einem Drehmomentsensor 5, Spurstangen 2, Faltenbälgen 3 und einem elektrischen Servomotor 12, wobei der Servomotor 12 seitlich gegenüber der Zahnstange versetzt ist. Bei der dargestellten Bauform treibt der Servomotor 12 die Zahnstange über ein Zahnriemengetriebe an, das in einem Getriebegehäuse 13 läuft. Am Getriebegehäuse 13 ist bei dieser Bauform der tiefste Punkt des Lenkgetriebes angeordnet. An dem tiefsten Punkt ist wie in der Figur 1 das erfindungsgemäße Wasserablassventil 10 montiert.

Die Figur 3 zeigt das Wasserablassventil 10 in einer ersten Ausführungsform in einem Längsschnitt in der Einbauposition gemäß Figur 1 oder Figur 2. Das Ventil ist im wesentlichen rotationssymmetrisch zu einer Achse 15 ausgebildet.

Das Ventil 10 umfasst im wesentlichen drei Bauelemente, nämlich einen Sockel 16, einen Deckel 17 und eine Membran 18, die das bewegliche Ventilglied darstellt.

Die Figur 4 zeigt eine Ansicht des Sockels 16 von der Seite der Membran 18 her, jedoch bei abgenommener Membran 18. Die Ansicht entspricht einer Draufsicht von unten in der Figur 3.

Die drei Bauelemente des Ventils werden nachfolgend anhand der Figuren 3 und 4 näher beschrieben.

Der Sockel 16 weist einen Stutzen 20 auf, welcher ein Schraubgewinde 21 und einen O-Ring 22 trägt. Der Stutzen 20 umgibt einen innen liegenden freien Durchgang 23. Von einer freien Öffnung 24 her verläuft der Durchgang 23 zu einem Raum 25, der etwa schreibenförmig ausgebildet ist, im Durchmesser größer ist als der Durchgang 23 und der an seiner den Durchgang 23 abgewandten Seite an einen Boden 26 angrenzt.

Der Boden 26 weist koaxial zu der Achse 15 eine

Durchgangsbohrung 27 auf. In Radialrichtung weiter außen sind insgesamt drei Durchbrüche 28 vorgesehen, die als Ringsegmente ausgebildet sind und eine etwa bohnenförmige Gestalt haben. Dargestellt sind in der Figur insgesamt drei Durchbrüche 28. Es können aber auch mehr oder weniger Durchbrüche vorgesehen sein.

In der Draufsicht der Figur 4 sind Nuten 29 dargestellt, die ausgehend von den Durchbrüchen 28 in die untere Oberfläche des Bodens 26 eingebracht sind. Die Nuten 29 sind also zu der in Figur 3 mit 18 bezeichneten Membran hin offen. Sie verlaufen bezüglich der Symmetrieachse 15 des Ventils 10 von den Durchbrüchen 28 nach außen. Das außen liegende Ende der Nuten 29 grenzt an einen Ringwulst 30, der über die untere Oberfläche des Bodens 26 hinaus steht. Radial außerhalb des Ringwülstes 30 ist ein Umfangsbereich 31 des Sockels 16 vorgesehen, der in der Figur 3 den Deckel 17 trägt.

Die Membran 18 ist rotationssymmetrisch bezüglich der Achse 15 ausgebildet. Sie weist von innen nach außen einen pilzförmigen Zapfen 36 auf, der zur Befestigung der Membran in der Bohrung 27 dient. Der Zapfen 36 ist bei dieser Ausführungsform von einer zentrischen Sackbohrung 32 durchsetzt und dadurch bei der Montage leichter komprimierbar. Der Zapfen 36 ist außen von einem Ringbund 33 umgeben, der eine Anlagefläche an die die Bohrung 27 umgebende Oberfläche des Bodens 26 darstellt. Vom dem Ringbund 33 aus erstreckt sich nach einem Absatz 34 ein ringförmiger Membranteller 35 mit von innen nach außen abnehmender Materialstärke. Der Durchmesser der Membran 18 ist größer als der Durchmesser des kreisförmig, konzentrisch zur Achse 15 und zum Zapfen 36 an der Unterseite des Sockels 16 angeordneten Wulstes 30. Der Membranteller 35 liegt also mit seiner dem Ringwulst 30 zugewandten Oberfläche in der Grundstellung, die in der Figur 3 dargestellt ist, linienförmig an.

Die Unterseite des Membrantellers 35 ist im wesentlichen plan.

Der Deckel 17 ist wiederum etwa rotationssymmetrisch zu der Achse 15 ausgebildet. Von innen nach außen weist der Deckel 17 eine Erhebung 40 auf, die sich in der Montagestellung der Figur 3 bis in die Nähe der Membran 18 erstreckt. Ein anschließender Bodenbereich 41 ist von Durchgangsbohrungen 42 durchsetzt. Eine gestufte ringförmige Wandung 43 umgibt den Bodenbereich 41. Der Innendurchmesser der Wandung 43 ist so ausgebildet, dass der Deckel 17 mit einer Press- oder Übergangspassung auf die äußere Umfangsfläche des Sockels 16 aufgepresst werden kann.

In der montierten Darstellung der Figur 3 ist die Membran 18 mit dem pilzförmigen Bereich des Zapfens 35 in die Bohrung 27 des Sockels 16 eingesetzt. Die Membran 18 liegt in der Ruhestellung mit ihrer Oberfläche an dem ringförmigen Wulst 30 an. Der Deckel 17 begrenzt einen Raum unterhalb der Membran 18 und schützt die Membran 18 vor Beschädigungen. Das Ventil 10 ist in der dargestellten Montagestellung geschlossen. Durch die Bohrungen 42 eindringendes Wasser, das von unten an die Membran 18 gelangt, kann nicht in den Durchgang 23 gelangen. Das Ventil 10 schützt also das Getriebegehäuse 7 aus Figur 1 bzw. das Getriebegehäuse 13 aus Figur 2 gegenüber von außen eindringendem Wasser.

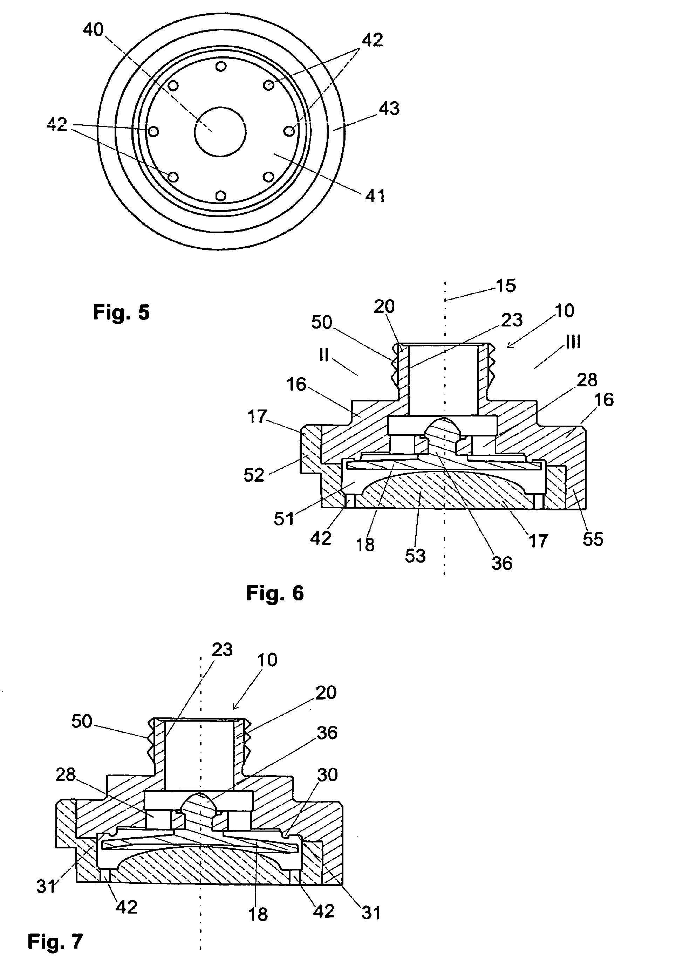

Die Figur 5 zeigt den Deckel 17 in einer Draufsicht, und zwar auf die Oberseite, die in der Figur 3 der Membran 18 zugewandt ist. Die im Zusammenhang der Figur 3 beschriebenen Bauelemente sind mit gleichen Bezugsziffern gekennzeichnet.

Die Figur 6 zeigt zwei weitere Ausführungsbeispiele, die in der linken Hälfte der Figur 6 mit II und in der rechten Hälfte der Figur 6 mit III gekennzeichnet sind.

Der Stutzen 20 umgibt den Durchgang 23. Hier ist an der Außenseite des Stutzens 20 jedoch kein Gewinde, sondern eine Gruppe von umlaufenden Rippen oder Vorsprüngen 50 vorgesehen, die eine Abdichtung des Ventils 10 beim Einpressen in eine Gehäusebohrung ohne Gewinde bewirken. Der Sockel 16 ist in der Ausführungsform II ansonsten wie in der Figur 3 ausgebildet. Die Membran 18 ist ebenfalls ähnlich, nur ist der Zapfen 36 in diesen beiden Ausführungsbeispielen II und III nicht mit der zentrischen Sackbohrung 32 aus Figur 3 versehen. Dies ist eine einfacher zu produzierende Ausführungsform. Denkbar und möglich ist es, auch für diese Ausführungsformen eine Membran 18 mit einer Sackbohrung 32 im Zapfen 36 einzusetzen. Ein Raum 51 unterhalb der Membran 18 wird bei II von einem Deckel 52 begrenzt, der wie in der Figur 3 außen mit einer Presspassung auf den Sockel 16 aufgesetzt ist und diesen an seinem äußeren Umfang umgreift. Zentrisch gegenüber der Membran ist der Deckel 52 mit einer kuppelartigen Erhebung 53 versehen, die bis unmittelbar an die Membran 18 heran reicht und diese in ihrem Zentrum nahezu berührt. Der radial nach außen abfallende Vorsprung 53 stellt eine Anschlagfläche für die Membran 18 dar, an die sie sich bei großer Belastung anlegen kann. Die Oberfläche des Vorsprungs 53 verhindert auf diese Weise bei extremen Auslenkungen der Membran 18, dass diese sich durch Knicken dauerhaft verformt.

Die Ausführungsform III in der rechten Hälfte der Figur 6 unterscheidet sich von der Ausführungsform II dadurch, dass der Sockel 16 hier im Bereich des Deckels mit einem rohrförmigen Vorsprung 55 ausgebildet ist, der sich in Axialrichtung von der Membran 18 weg erstreckt. Der Deckel 17 ist hier im Durchmesser kleiner ausgeführt und wird in den rohrförmigen Ansatz 55 eingepresst. Bei der Ausführungsform III ist der Deckel 17 im Durchmesser kleiner als bei den anderen Ausführungsformen. Die innen liegende zylindrische Kontaktfläche zwischen dem Deckel 17 und dem Vorsprung 55 erlaubt es, dass der Vorsprung 55 des Sockels 16 außen mit einer Kontur versehen wird, beispielsweise mit einem Sechskant. Dies ist hinsichtlich der Montage des Ventils 10 vorteilhaft, wenn nämlich Kräfte und Drehmomentkräfte auf den Fügebereich des Stutzens 20 ausgeübt werden müssen. Diese werden dann unmittelbar über den Sockel 16 eingeleitet und wieder ausgeleitet. Bei den Ausführungsformen aus Figur 3 oder bei der Ausführungsform II würden solche Kräfte über die Verbindung zwischen dem Deckel 17 und dem Sockel 16 übertragen werden.

In beiden Ausführungsformen ist es denkbar und möglich, den Abstand zwischen Membran 18 und Vorsprung 53 zu vergrößern.

Die beiden Ausführungsbeispiele in der Figur 6 zeigen das Ventil in geschlossener Stellung.

Die Figur 7 zeigt die Ausführungsformen gemäß Figur 6 in geöffneter Stellung des Ventils. Die Membran 18 ist hier über ihren gesamten Umfang von dem Wulst 30 abgehoben. Zwischen dem Durchgang 23 und den Öffnungen 42 des Deckels 17 besteht ein Durchgang, durch den Gase und Flüssigkeiten hindurch treten können.

Die besonders vorteilhafte Funktion der verschiedenen Ausführungsbeispiele des erfindungsgemäßen Ventils wird nachfolgend näher beschrieben.

Wie bereits zu Figur 3 erwähnt wurde, ist das Ventil 10 in der in Figur 3 und Figur 6 dargestellten Grundstellung geschlossen. Von außen durch die Durchgangsbohrungen 42 eintretendes Wasser kann das Ventil nicht öffnen. Der Innenraum des Lenkgetriebes wird also an dieser Stelle gegenüber eindringendem Wasser geschützt. Dies gilt insbesondere bei einem von außen angreifenden Wasserschwall, wie es beispielsweise bei Wasserdurchfahrten, bei denen die Lenkung vollständig getaucht wird, auftreten kann.

Andererseits kann beispielsweise durch defekte Faltenbälge 3 Wasser in das Lenkgetriebe 11 eindringen. Hierbei sind zwei Fälle zu unterscheiden.

Im ersten Fall dringt bei Tauchfahrt und einer größeren Beschädigung eines Faltenbalgs 3 eine große Menge Wasser in das Lenkgetriebe 11 ein. Das Ventil bleibt in der geschlossenen Stellung gemäß Figur 3 und Figur 6, weil auch an der Unterseite der Membran 18 Wasser ansteht. Nach Beendigung der Tauchfahrt läuft das gesamte Wasser zu der Oberseite der Membran 18 hin und bringt diese durch das Eigengewicht des eingedrungenen Wassers in die geöffnete Stellung gemäß Figur 7. Da sich das Ventil 10 an der in der Einbaulage der Lenkung tiefsten Stelle der Lenkung befindet, läuft das eingedrungene Wasser vollständig zu dem Ventil 10 und kann dort durch den Spalt zwischen der Membran 18 und dem Ringwulst 30 vollständig ablaufen.

Im zweiten Fall liegen nur geringfügige Beschädigungen eines Faltenbalgs 3 vor, beispielsweise durch Marderbiss. Spritzwasser bei Regenfahrten dringt nur in kleinen Mengen in die Lenkung ein. Es entstehen Tropfen, die im Laufe der Zeit innerhalb der Lenkung zu dem Ventil 10 hin laufen. Solche Tropfen sind grundsätzlich in der Lenkung unerwünscht, weil sie den Feuchtegehalt der Atmosphäre in der Lenkung erhöhen und dadurch zu Korrosion führen können. Solche tropfenweisen Wassermengen laufen durch den Durchgang 23, dem Raum 25 und die Durchbrüche 28 zu der Oberseite der Membran 18. Hier würden die Tropfen zunächst in dem Bereich zwischen der Membran 18 und den Durchbrüchen 28 stehen bleiben, wenn nicht die Nuten 29 vorgesehen wären. Das Zusammenwirken der Nuten 29 mit den jeweiligen Oberflächeneigenschaften der verwendeten Materialien und der Oberflächenspannung des Wassers führt dazu, dass die Tropfen an den Nuten 29 entlang bis zu dem Ringwulst 30 geleitet werden. Die Membran 18 ist aus einem leicht verformbaren Material mit geringer Rücksprungskraft ausgebildet und liegt deshalb nur leicht an dem Ringwulst 30 an oder bildet im Laufe der Zeit sogar einen kleinen Spalt zwischen der Membran 18 und dem Ringwulst 30. Das Gewicht des radial außen auf der Membran 18 anstehenden Wassertropfens reicht bei geeigneter Dimensionierung aus, um den Ringspalt zu öffnen oder durch den bereits vorhandenen Spalt abzufließen.

Wichtig ist es, hier zu erwähnen, dass auch wenn die Membran 18 nicht immer in die vollständig geschlossene Stellung zurückkehrt, die Sicherheit gegenüber von unten eindringendem Wasser dennoch gegeben ist, weil sich bei der kleinsten Berührung mit Wasser, welches durch die Bohrungen 42 von unten an die Membran gelangt, die Membran 18 wieder an den Ringwulst 30 anlegt und spätestens zu diesem Zeitpunkt das Ventil 10 geschlossen ist. Ein im Ruhezustand dauerhaft gebildeter Spalt zwischen der Membran 18 und dem Ringwulst 30 ist in manchen Fällen sogar vorteilhaft, wenn nämlich ein Luftaustausch des Innenvolumens des Lenkgetriebes 11 mit der äußeren Atmosphäre gewünscht ist, um durch das "Atmen" die Luft innerhalb des Getriebes trocken zu halten und das Entstehen von Überdruck oder Unterdruck im Lenkgetriebe beispielsweise durch Temperaturwechsel zu verhindern.

Als geeignete Materialien für das Ventil 10 hat sich für den Sockel 16 und den Deckel 17 Kunststoff erwiesen. Insbesondere kann der Kunststoff so gewählt oder behandelt werden, dass sich hydrophobe Eigenschaften einstellen, die den Durchtritt von tropfenweise anfallendem Wasser erleichtern. Die Membran 18 ist vorzugsweise aus Silikon, welches ebenfalls Wassertropfen ableitet, ohne selbst wesentlich benetzt zu werden.

Folgende Abmessungen haben sich in der Praxis als vorteilhaft herausgestellt:

Der Durchmesser der Membran 18 liegt zwischen 10 mm und 30 mm, bevorzugt bei 19 mm. Die Höhe des Zapfens 36 von der oberen Spitze bis zur Unterseite des Membrantellers liegt zwischen 3 mm und 8 mm bevorzugt bei 5,5 mm.

Die Dicke des Membrantellers nimmt von innen nach außen ab. Sie liegt innen zwischen 0,6 mm und 1,8 mm, bevorzugt 1,2 mm und außen entsprechend zwischen 0,45 mm und 1,35 mm, bevorzugt 0,9 mm.

Der Durchmesser des Ringwulstes 30 beträgt zwischen 9 mm und 25 mm, bevorzugt 17 mm. Die Höhe, mit der sich der Ringwulst 30 über die umgebende Ringfläche 31 erhebt, beträgt zwischen 0,05 mm und 0,15 mm, bevorzugt 0,10 mm. Dabei ist der Ringwulst 30 im Querschnitt etwa halbkreisförmig mit einem Radius zwischen 0,05 mm und 0,15 mm.

Der Innendurchmesser des Durchgangs 23 beträgt zwischen 3,5 mm und 9,5 mm, bevorzugt 6,5 mm. Als Gewinde 21 wird ein Gewinde der Abmessung M10 x 1,0 bevorzugt.

Die Nuten 29 weisen eine Tiefe in Richtung der Achse 15 und senkrecht zu der Bodenfläche 26 von 0,1 mm bis 0,9 mm, vorzugsweise 0,2 mm bis 0,4 mm und insbesondere 0,3 mm auf. Die Breite der Nuten beträgt 0,5 mm bis 1,5 mm, vorzugsweise 1,0 mm. Die Länge der Nuten ergibt sich aus dem Abstand zwischen den äußeren Rändern der Durchbrüche 28 und dem Ringwulst 30. Sie beträgt etwa 1,5 mm bis 4,5 mm, vorzugsweise 3 mm. Der Nutengrund kann dabei gerundet oder rechteckig gestaltet sein.

Der Gesamtdurchmesser des dargestellten Ventils beträgt 14 mm bis 42 mm, bevorzugt etwa 28 mm. Die Gesamthöhe des Ventils von der Unterseite des Deckels 17 bis zum freien Ende des Stutzens 20 beträgt 9 mm bis 26 mm, vorzugsweise 17 mm.

## Patentansprüche

1. Wasserablassventil für eine elektromechanische Kraftfahrzeugservolenkung,
- mit einem Sockel (16) und einer Membran (18), die als bewegliches Ventilglied ausgebildet ist und die relativ zu dem Sockel (16) zwischen einer geschlossen Stellung und einer offenen Stellung beweglich angeordnet ist,
- wobei die Membran (18) in der geschlossenen Stellung mit dem Sockel (16) entlang einem Ringwulst (30) in Anlage ist,
- wobei der Sockel einen Durchgang (23) aufweist, der von einer freien Öffnung (24) zu einem Boden (26) verläuft und die Membran (18) mittig an dem Boden (26) befestigt ist,
- wobei der Boden (26) wenigstens einen Durchbruch (28) aufweist, der eine Verbindung von dem Durchgang (23) zu der Membran (18) darstellt,
**dadurch gekennzeichnet, dass** der Boden (26) wenigstens eine Nut (29) aufweist, die zu der Membran (18) hin offen ist und die sich von dem wenigstens einen Durchbruch (28) bezüglich einer rotations Symmetrieachse (15) des Ventils (10) von den Durchbrüchen (28) nach außen bis zu dem Ringwulst (30) erstreckt.

2. Wasserablassventil nach Anspruch 1, **dadurch gekennzeichnet, dass** der Ringwulst (30) kreisrund verläuft und eine zentrale Achse (15) konzentrisch umschließt.

3. Wasserablassventil nach einem der vorhergehenden Ansprüche, **dadurch gekennzeichnet, dass** die wenigstens eine Nut (29) eine Nutentiefe, gemessen in Richtung der Achse (15) und senkrecht zu der Bodenfläche (26), von 0,1 mm bis 0,9 mm, vorzugsweise 0,2 mm bis 0,4 mm und insbesondere 0,3 mm aufweisen.

4. Wasserablassventil nach einem der vorhergehenden Ansprüche, **dadurch gekennzeichnet, dass** die Breite der Nuten 0,5mm bis 1,5mm, vorzugsweise 1,0mm beträgt.

5. Wasserablassventil nach einem der vorhergehenden Ansprüche, **dadurch gekennzeichnet, dass** die Länge der Nuten zwischen den äußeren Rändern der Durchbrüche (28) und dem Ringwulst (30) 1,5 mm bis 4,5 mm, vorzugsweise 3mm beträgt.

6. Wasserablassventil nach einem der vorhergehenden Ansprüche, **dadurch gekennzeichnet, dass** die Membran (18) einen runden Membranteller (35) umfasst, der eine sich von innen nach außen reduzierende Materialstärke aufweist, die innen zwischen 0,6 mm und 1,8 mm, bevorzugt 1,2 mm und außen entsprechend zwischen 0,45 mm und 1,35 mm, bevorzugt 0,9 mm beträgt.

7. Wasserablassventil nach einem der vorhergehenden Ansprüche, **dadurch gekennzeichnet, dass** die Membran (18) mit einem mittigen Zapfen (36) in einer mittigen Bohrung (27) des Bodens (26) befestigt ist.

8. Wasserablassventil nach Anspruch 7, **dadurch gekennzeichnet, dass** der Zapfen (36) eine mittig angeordnete Sackbohrung (32) aufweist.

9. Wasserablassventil nach einem der vorhergehenden Ansprüche, **dadurch gekennzeichnet, dass** die Membran (18) auf ihrer dem Sockel (16) abgewandten Seite mittels eines Deckels (17) abgedeckt ist.

10. Elektromechanische Kraftfahrzeugservolenkung mit einem Wasserablassventil (10), aufweisend:
- einen an einem tiefen Punkt eines Lenkungsgehäuses angeordneten Sockel (16) und eine Membran (18), die als bewegliches Ventilglied ausgebildet ist und die relativ zu dem Sockel (16) zwischen einer geschlossen Stellung und einer offenen Stellung beweglich angeordnet ist,
- wobei die Membran (18) in der geschlossenen Stellung mit dem Sockel (16) entlang einem Ringwulst (30) in Anlage ist,
- wobei der Sockel einen zu einem Innenraum des Lenkungsgehäuses offenen Durchgang (23) aufweist, der von einer freien Öffnung (24) zu einem Boden (26) verläuft und die Membran (18) mittig an dem Boden (26) befestigt ist,
- wobei der Boden (26) wenigstens einen Durchbruch (28) aufweist, der eine Verbindung von dem Durchgang (23) zu der Membran (18) darstellt,
**dadurch gekennzeichnet, dass** der Boden wenigstens eine Nut (29) aufweist, die zu der Membran (18) hin offen ist und die sich von dem wenigstens einen Durchbruch (28) bezüglich der Symmetrieachse (15) des Ventils (10) von den Durchbrüchen (28) nach außen bis zu dem Ringwulst (30) erstreckt.

11. Elektromechanische Kraftfahrzeugservolenkung nach Anspruch 10, **dadurch gekennzeichnet, dass** die Membran (18) zwischen dem Sockel (16) und einem Deckel (17) gelagert ist.

12. Elektromechanische Kraftfahrzeugservolenkung nach einem der vorhergehenden Ansprüche 10 - 11, **dadurch gekennzeichnet, dass** die Membran (18) im Ruhezustand nicht über den gesamten Umfang an dem Ringwulst (30) anliegt.

13. Elektromechanische Kraftfahrzeugservolenkung nach einem der vorhergehenden Ansprüche 10 - 12, **dadurch gekennzeichnet, dass** die Membran (18) und/oder der Sockel (16) eine hydrophobe Oberfläche aufweisen.

14. Elektromechanische Kraftfahrzeugservolenkung mit einem Wasserablassventil nach einem der vorhergehenden Ansprüche 1 bis 9.

## Claims

1. Water outlet valve for an electromechanical power steering system of a motor vehicle,
- having a base (16) and a membrane (18) which is designed as a moveable valve member and which is moveably arranged relative to the base (16) between a closed position and an open position,
- the membrane (18) abutting in the closed position with the base (16) along an annular ring (30),
- the base having a passage (23) which runs from a free opening (24) to a bottom (26) and the membrane (18) being centrally secured to the bottom (26),
- the bottom (26) having at least one breakthrough (28) which constitutes a connection from the passage (23) to the membrane (18),
**characterised in that** the bottom (26) has at least one groove (29) which is open towards the membrane (18) and which extends outwards as far as the annular ring (30) from the at least one breakthrough (28) with respect to a rotational axis of symmetry (15) of the valve (10) from the breakthroughs (28).

2. Water outlet valve according to Claim 1, **characterised in that** the annular ring (30) runs in a circular manner and concentrically encloses a central axis (15).

3. Water outlet valve according to any one of the preceding claims, **characterised in that** the at least one groove (29) comprises a groove depth, measured in the direction to the axis (15) and perpendicular to the bottom surface (26), of 0.1 mm to 0.9 mm, preferably 0.2 mm to 0.4 mm and in particular 0.3 mm.

4. Water outlet valve according to any one of the preceding claims, **characterised in that** the width of the grooves is 0.5 mm to 1.5 mm, preferably 1.0 mm.

5. Water outlet valve according to any one of the preceding claims, **characterised in that** the length of the grooves between the outer edges of the breakthroughs (28) and the annular ring (30) is 1.5 mm to 4.5 mm, preferably 3 mm.

6. Water outlet valve according to any one of the preceding claims, **characterised in that** the membrane (18) comprises a round membrane plate (35), which has a material thickness which reduces from the inside outward, which is between 0.6 mm and 1.8 mm, preferably 1.2 mm inside and correspondingly between 0.45 mm and 1.35 mm, preferably 0.9 mm outside.

7. Water outlet valve according to any one of the preceding claims, **characterised in that** the membrane (18) is secured with a central peg (36) in a central bore (27) of the bottom (26).

8. Water outlet valve according to Claim 7, **characterised in that** the peg (36) comprises a centrally arranged blind hole (32).

9. Water outlet valve according to any one of the preceding claims, **characterised in that** the membrane (18) is covered on its side facing away from the base (16) by means of a cover (17).

10. Electromechanical power steering system of a motor vehicle having a water outlet valve (10), comprising:
- a base (16) arranged at a low point of a steering system housing and a membrane (18) which is designed as a moveable valve member and which is moveably arranged relative to the base (16) between a closed position and an open position,
- the membrane (18) abutting in the closed position with the base (16) along an annular ring (30),
- the base having a passage (23) opening towards the interior of the steering system housing, which passage runs from a free opening (24) to a bottom (26) and the membrane (18) being centrally secured to the bottom (26),
- the bottom (26) having at least one breakthrough (28) which constitutes a connection from the passage (23) to the membrane (18),
**characterised in that** the bottom has at least one groove (29) which is open towards the membrane (18) and which extends outwards as far as the annular ring (30) from the at least one breakthrough (28) with respect to the axis of symmetry (15) of the valve (10) from the breakthroughs (28).

11. Electromechanical power steering system of a motor vehicle according to Claim 10, **characterised in that** the membrane (18) is mounted between the base (16) and a cover (17).

12. Electromechanical power steering system of a motor vehicle according to any one of the preceding Claims 10 - 11, **characterised in that** the membrane (18) does not bear over the entire periphery on the annular ring (30) in the non-operating state.

13. Electromechanical power steering system of a motor vehicle according to any one of the preceding Claims 10 - 12, **characterised in that** the membrane (18) and/or the base (16) have a hydrophobic surface.

14. Electromechanical power steering system of a motor vehicle having a water outlet valve (10) according to any one of the preceding Claims 1 to 9.

## Revendications

1. Soupape d'échappement d'eau pour une direction assistée électromécanique d'un véhicule automobile,
- comprenant un socle (16) et une membrane (18), laquelle est réalisée à titre d'opercule de soupape mobile et est agencée déplaçable par rapport au socle (16) entre une position fermée et une position ouverte,
- dans laquelle la membrane (18) est en contact avec le socle (16) le long d'un bourrelet annulaire (30) dans la position fermée,
- dans laquelle le socle comporte un passage traversant (23), qui s'étend depuis une ouverture libre (24) jusqu'à un fond (26), et la membrane (18) est fixée au milieu au fond (26),
- dans laquelle le fond (26) comporte au moins une traversée (28) qui représente une liaison depuis le passage traversant (23) jusqu'à la membrane (18),
**caractérisée en ce que** le fond (26) comporte au moins une rainure (29), qui est ouverte vers la membrane (18) et qui s'étend depuis ladite au moins une traversée (28) par rapport à un axe de symétrie de révolution (15) de la soupape (10) depuis les traversées (28) vers l'extérieur jusqu'au bourrelet annulaire (30).

2. Soupape d'échappement d'eau selon la revendication 1, **caractérisée en ce que** le bourrelet annulaire (30) s'étend sous forme circulaire et entoure un axe central (15) de manière concentrique.

3. Soupape d'échappement d'eau selon l'une des revendications précédentes, **caractérisée en ce que** ladite au moins une rainure (29) présente une profondeur de rainure, mesurée en direction de l'axe (15) et perpendiculairement à la surface du fond (26), de 0,1 mm à 0,9 mm, de préférence de 0,2 mm à 0,4 mm, et en particulier 0,3 mm.

4. Soupape d'échappement d'eau selon l'une des revendications précédentes, **caractérisée en ce que** la largeur des rainures s'élève de 0,5 mm à 1,5 mm, de préférence 1,0 mm.

5. Soupape d'échappement d'eau selon l'une des revendications précédentes, **caractérisée en ce que** la longueur des rainures entre les bordures extérieures des traversées (28) et le bourrelet annulaire (30) s'élève de 1,5 mm à 4,5 mm, de préférence 3 mm.

6. Soupape d'échappement d'eau selon l'une des revendications précédentes, **caractérisée en ce que** la membrane (18) comprend un plateau de membrane rond (35), qui présente une épaisseur de matériau qui se réduit de l'intérieur vers l'extérieur, s'élevant à l'intérieur entre 0,6 mm et 1,8 mm, de préférence 1,2 mm, et s'élevant à l'extérieur de façon correspondante entre 0,45 mm et 1,35 mm, de préférence 0,9 mm.

7. Soupape d'échappement d'eau selon l'une des revendications précédentes, **caractérisée en ce que** la membrane (18) est fixée avec un tenon central (36) dans un perçage central (27) du fond (26).

8. Soupape d'échappement d'eau selon la revendication 7, **caractérisée en ce que** le tenon (36) comporte un perçage borgne (32) agencé au milieu.

9. Soupape d'échappement d'eau selon l'une des revendications précédentes, **caractérisée en ce que** la membrane (18) est recouverte au moyen d'un couvercle (17) sur son côté détourné du socle (16).

10. Direction assistée électromécanique pour véhicule automobile comprenant une soupape d'échappement d'eau (10), laquelle comprend:
- un socle (16) agencé en un point profond d'un boîtier de direction, et une membrane (18), laquelle est réalisée à titre d'opercule de soupape déplaçable, et qui est agencée déplaçable par rapport au socle (16) entre une position fermée et une position ouverte,
- dans laquelle la membrane (18) est en contact avec le socle (16) le long d'un bourrelet annulaire (30) dans la position fermée,
- dans laquelle le socle comporte un passage traversant (23), ouvert vers une chambre intérieure du boîtier de direction et s'étendant depuis une ouverture libre (24) jusqu'à un fond (26), et la membrane (18) est fixée au milieu au fond (26),
- dans laquelle le fond (26) comporte au moins une traversée (28) qui représente une liaison depuis le passage traversant (23) jusqu'à la membrane (18),
**caractérisée en ce que** le fond comporte au moins une rainure (29), laquelle est ouverte vers la membrane (18) et s'étend depuis ladite au moins une traversée (28) par rapport à l'axe de symétrie (15) de la soupape (10) vers l'extérieur depuis les traversées (28) jusqu'au bourrelet annulaire (30).

11. Direction assistée électromécanique pour véhicule automobile selon la revendication 10, **caractérisée en ce que** la membrane (18) est montée entre le socle (16) et un couvercle (17).

12. Direction assistée électromécanique pour véhicule automobile selon l'une des revendications précédentes 10 - 11, **caractérisée en ce que** la membrane (18) ne s'applique pas sur la totalité de la périphérie contre le bourrelet annulaire (30) dans la situation de repos.

13. Direction assistée électromécanique pour véhicule automobile selon l'une des revendications précédentes 10 à 12, **caractérisée en ce que** la membrane (18) et/ou le socle (16) présente une surface hydrophobe.

14. Direction assistée électromécanique pour véhicule automobile comprenant une soupape d'échappement d'eau (10) selon l'une des revendications précédentes 1 à 9.
